# EUROPEAN PATENT SPECIFICATION

(11) **EP 1 253 170 B1**
(45) Date of publication and mention of the grant of the patent: **13.06.2007**
(21) Application number: 02009209.4
(22) Date of filing: 24.04.2002
(51) Int. Cl.: C08L 9/06

(54) **Rubber composition for tire tread**
Kautschukzusammensetzung für Reifenlauffläche
Composition de caoutchouc pour bande de roulement

(30) Priority: 24.04.2001 JP 2001126510
(43) Date of publication of application: 30.10.2002
(73) Proprietor: THE YOKOHAMA RUBBER CO., LTD., Tokyo 105-8685 (JP)
(72) Inventor: Takase, Kazuhiro,., 2-1, Oiwake, Hiratsuka-shi, Kanagawa (JP); Aibe, Sadafumi, 2-1, Oiwake, Hiratsuka-shi, Kanagawa (JP); Karato, Takeshi, Zeon Corp., Research & Dev. Ctr., Kawasaki-shi, Kanagawa (JP); Komatsu, Masaaki, Zeon Corp., Research & Dev. Ctr., Kawasaki-shi, Kanagawa (JP)
(74) Representative: HOFFMANN EITLE

(56) References cited:
- EP-A- 0 087 736
- EP-A- 0 502 728
- EP-A- 0 585 012
- SCHNETGER J.: 'Lexikon der Kautschuk-Technik, 2.Auflage', 1991, HÜTHIG, HEIDELBERG * page 640; table *

## Description

### TECHNICAL FIELD

The present invention relates to a rubber composition for a high performance tire tread, more particularly a rubber composition for a tire tread having improved dry/wet grip without increasing the temperature dependency of hardness.

### BACKGROUND ART

As a technique for improving the dry grip of a tire, it has been known in the past to blend a rubber with a low molecular weight SBR (Japanese Unexamined Patent Publication (Kokai) No. 6-279620 etc.). However, when a rubber is blended with a low molecular weight SBR, the Tg of the rubber composition as a whole normally increases and, as a result, the temperature dependency of the hardness increases and the wet grip is decreased. Further, if a plasticizer is blended or the Tg of the low molecular weight SBR is decreased to decrease the temperature dependency of the hardness, there was the problem of decreasing the dry grip. Therefore, in the prior art for blending low molecular weight SBR, it was impossible to achieve a high degree of balance in the dry/wet grip.

EP 0 585 012 A1 discloses a rubber composition which is said to satisfy wear resistance and fracture properties as well as wet skid resistance, ice skid resistance and dry gripping property. It is provided by including at least 30 % by weight of a rubber ingredient which consists of 100 parts by weight of a particular branched styrene-butadiene copolymer (A) and 15 to 100 parts by weight of a low molecular weight butadiene polymer (B) having a Mooney viscosity of 30 to 100. Example 9 of this document contains 80 parts of a premix of 50 parts of high molecular weight SBR copolymer and 30 parts of low molecular weight SBR copolymer as well as 50 parts of emulsion polymerized SBR.

### DISCLOSURE OF INVENTION

Accordingly, an object of the present invention is to provide a rubber composition for a tire tread achieving a high degree of balance of the dry/wet grip in the tire tread rubber composition, without increasing the temperature dependency of hardness.

In accordance with the present invention, there is provided a rubber composition for a tire tread comprising (A) 60 to 90 parts by weight of a rubber ingredient (A) composed of SBR having a styrene content (St) of not more than 40% by weight, a vinyl content (Vn) in a polybutadiene moiety of 20 to 70% by weight, and a weight average molecular weight (Mw) of 60,000 to 3,000,000, (B) 10 to 40 parts by weight of a rubber component composed of a styrene-butadiene copolymer rubber having a Tg of not more than - 45°C and (C) 5 to 200 parts by weight, based upon 100 parts by weight of the rubber component (A), of a rubber component composed of low molecular weight SBR having an St of 1 to 60% by weight, a Vn of 20 to 80% by weight and an Mw of 2,000 to 50,000 the total amount of the rubber component (A) and the rubber component (B) being 100 parts by weight, wherein Tg (A) ≥ Tg (B) + 20°C.

### BEST MODE FOR CARRYING OUT THE INVENTION

According to the present invention, the inventors found that by combining a low molecular weight SBR having a specific microstructure and a diene-based rubber having a Tg of not more than -45°C, a rubber composition for a tire tread achieving an improvement in the dry/wet grip without increasing the temperature dependency of hardness is obtained.

As the rubber component (A) used for the rubber composition for a tire tread of the present invention, SBR having a styrene content (St) of not more than 40% by weight, preferably 5 to 37% by weight, a vinyl content (Vn) in the polybutadiene moiety of 20 to 70% by weight, preferably 30 to 70% by weight, and a weight average molecular weight (Mw) of 60,000 to 3,000,000, preferably 70,000 to 2,000,000, is blended in an amount of 60 to 90 parts by weight, based upon 100 parts by weight of the total of the rubber components (A) and (B). When the amounts of St and Vn of the component (A) are outside of the above ranges, the temperature dependency of hardness of the rubber composition and the balance of the dry/wet grip are adversely affected. When an amount of the rubber component (A) to be blended is less than 60 parts by weight, the grip increase effect is small.

Further, the rubber component (B) is a diene-based rubber having a glass transition temperature (Tg) of not more than -45°C, preferably -105°C to -45°C and is used in an amount of 10 to 40 parts by weight, based upon 100 parts by weight of the total of the rubber components (A) and (B). As the diene-based rubber component (B), for example, the various types of styrene-butadiene copolymer rubber (SBR) can be used. However, when the SBR rubber is used for the tire tread of the present invention, to achieve both grip and abrasion resistance and to decrease the temperature dependency of hardness, which are the objects of the present invention, it is necessary to use SBR rubber having a glass transition temperature (Tg) of not more than -45°C as an average value. If the Tg of the rubber component (B) is higher than -45°C, the temperature dependency of the hardness becomes larger. If the amount blended is less than 10 parts by weight of the total weight of the rubber components (A) and (B), the effect of improvement in the temperature dependency of the hardness is small, whereas if the amount is more than 40 parts by weight, the grip is decreased. Tg of the rubber component (A) - Tg of the rubber component (B) is 20°C or more, more preferably 25 to 60°C.

Further, as the rubber component (C), a low molecular weight SBR having a styrene content (St) of 1 to 60% by weight, preferably 10 to 50% by weight, a vinyl content (Vn) in the polybutadiene part of 20 to 80% by weight, preferably 30 to 70% by weight, and a weight average molecular weight (Mw) of 2,000 to 50,000, preferably 4,000 to 50,000 is blended in an amount of 5 to 200 parts by weight, preferably 5 to 100 parts by weight, based upon 100 parts by weight of the rubber component (A). When St and Vn amounts of the component (C) are outside of the above range, the balance of the dry/wet grip of the rubber composition is similarly adversely affected. When an amount of the rubber component (C) blended is less than 5 parts by weight based upon 100 parts by weight of the rubber component (A), the grip increase effect is small, whereas if the amount is more than 200 parts by weight, the processability is adversely affected. The amount of the rubber component (C) blended is particularly preferably 5 to 50 parts by weight based upon 100 parts by weight of the rubber ingredient (A). When the weight average molecular weight (Mw) is less than 2,000, the breakage characteristic of the rubber composition is adversely affected, whereas if the molecular weight is more than 50,000, the grip increase effect is small.

The rubber components (A) and (C); (B) and (C); (A), (B), and (C); or (A) and (B) may be obtained by blending the polymerized rubbers, followed by coagulating and drying or by blending dried rubbers. Further, the rubber components may be blended with various known compounding agents. Preferably, the rubber component (C) may be blended with the component (A), then coagulated and dried. This latter batch is easy to handle.

In the rubber composition for a tire tread of the present invention, it is preferable to use silica in an amount of at least 20 parts by weight, preferably 20 to 135 parts by weight, more preferably 20 to 100 parts by weight based upon the total amount of the rubber components (A) and (B). By using this amount of silica, the wet performance and the dry high speed driving stability can be obtained. When the silica is blended, the temperature dependency of the hardness can be further decreased. As fillers other than silica, in general carbon black or silica surface treated carbon black may be blended in a predetermined amount. As the silica, it is possible to use any silica ordinarily blended into this type of rubber composition, for example, wet silica, dry silica, surface treated silica, etc. When using these silicas, it is preferable to also use a silane coupling agent known in this technical field in order to improve the reinforcement of the rubber.

The rubber composition for a tire tread of the present invention may further include therein various compounding agents generally blended into the rubber such as an ordinary vulcanization or cross-linking agent, vulcanization or cross-linking accelerator, various types of oils, an antioxidant, a filler, a plasticizer, a softener etc. The amounts of these compounding agent can be made the conventional general amounts blended so long as the object of the present invention is not adversely affected.

### EXAMPLES

The present invention will now be explained in further detail by Examples and Comparative Examples, but the technical scope of the present invention is of course not limited to these Examples.

The formulations (A) and (B) and compounding components in the Examples and Comparative Examples are as shown in the following Tables I and II.

**Table I (Formulation A)**

| Formulating component | Commercially available product | Parts by weight |
|---|---|---|
| Rubber component | Rubber A + B | 100.0 |
| Silica | Nipsil AQ (made by Nippon Silica) | 80.0 |
| Silane coupling agent | Si 69 (made by Degussa) | 6.4 |
| Antioxidant | Antigene 6C (N-phenyl-N'-(1,3-dimethyl)-p-phenylenediamine) (made by Sumitomo Chemical) | 2.0 |
| Zinc white | Zinc White No. 3 (made by Seido Kagaku) | 3.0 |
| Stearic acid | (Made by NOC) | 2.0 |
| Aromatic oil | Process Oil X-140 (made by Kyodo Sekiyu) | 20.0 |
| Vulcanication accelerator 1 | Suncellar D-G (diphenyl guanidine) (made by Sanshin Chemical) | 0.5 |
| Vulcanization accelerator 2 | Noccelar CZ (N-cyclohexyl-2-benzothiazolyl-sulfenamide) (made by Ouchi Shinko Chemical) | 1.5 |
| Sulfur | Oil extended sulfur | 1.5 |

**Table II (Formulation B)**

| Formulating component | Commercially available product | Parts by weight |
|---|---|---|
| Rubber ingredient | Rubber A + B | 100.0 |
| Carbon black | Dia Black A (made by Mitsubishi Kagaku) | 90.0 |
| Antioxidant | Antigene 6C (N-phenyl-N'-(1,3-dimethyl)-p-phenylenediamine) (made by Sumitomo Chemical) | 2.0 |
| Zinc white | Zinc White No. 3 (made by Seido Kagaku) | 3.0 |
| Stearic acid | (Made by NOC) | 2.0 |
| Aromatic oil | Process Oil X-140 (made by Kyodo Sekiyu) | 20.0 |
| Vulcanication accelerator 1 | Suncellar D-G (diphenyl guanidine) (made by Sanshin Chemical) | 0.5 |
| Vulcanization accelerator 2 | Noccelar CZ (N-cyclohexyl-2-benzothiazolyl-sulfenamide) (made by Ouchi Shinko Chemical) | 1.5 |
| Sulfur | Oil extended sulfur | 1.5 |

### Preparation of Test Sample

The formulating components other than the vulcanization accelerator and the sulfur were mixed in a 1.8 liter closed type mixer for 3 to 5 minutes. The vulcanization accelerator and sulfur were mixed into the resultant master batch by an 8-inch open roll to obtain a rubber composition. Thereafter, this composition was press vulcanized in a 15 x 15 x 0.2 cm mold at 160°C for 20 minutes to prepare the desired test piece (i.e., rubber sheet). This was measured and evaluated for the stretch type viscoelasticity tanδ (0°C and 60°C) and JIS hardness (0°C and 60°C).

The methods for measurement and evaluation in the Examples were as follows:
1) Stretch type viscoelasticity tanδ (0°C, 60°C): a Toyo Seiki Seisakusho Rheolograph Solid was used to measure the viscoelasticity at an initial strain of 10%, a dynamic strain of ±2% and a frequency of 20Hz (sample width: 5 mm). The tanδ (0°C) is an indicator of the wet grip. The higher the value, the better the results. Further, the tanδ (60°C) is an indicator of the dry grip. The higher the value, the better the results.
2) Δ hardness: The JIS hardnesses (0°C) and (60°C) were measured according to JIS K6301 Spring Type Hardness Test Type A. The temperature dependency of the hardness was evaluated using the difference as the Δ hardness. The lower the value, the smaller the temperature dependency of the hardness and the better the result.

### Specifically, it is best when the ΔHs is less than 20

### Examples 1 to 10 and Comparative Examples 1 to 8

The results of the rubber compositions of the formulations (A) and (B) in the Examples are shown in the following Table III with reference to Comparative Example 1.

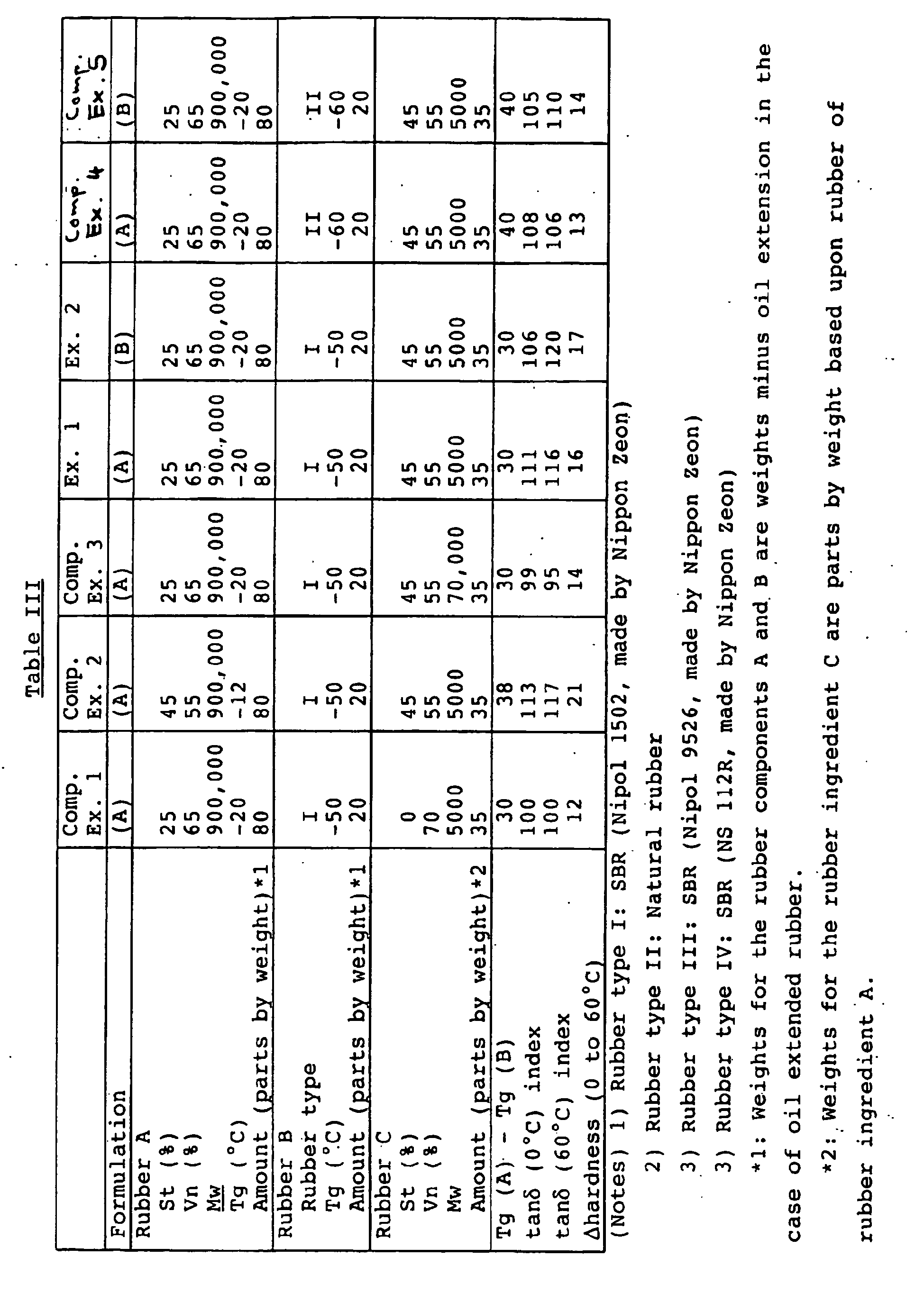

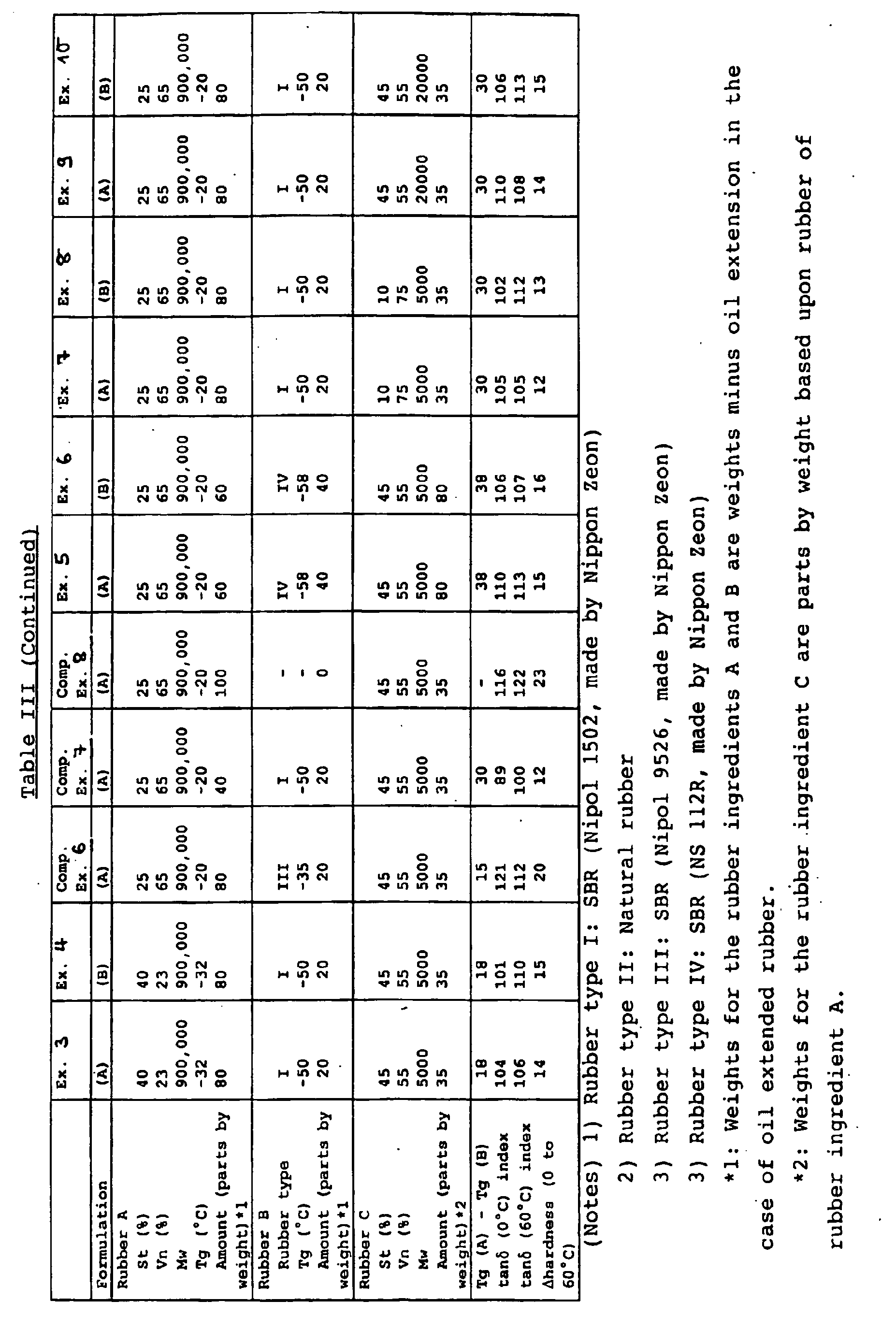

### INDUSTRIAL APPLICABILITY

As will be seen from the results shown in Table III, the rubber composition according to the present invention has a superior effect in the dry/wet grip without increasing the temperature dependency of the hardness, and therefore the rubber composition according to is useful as a rubber composition for a tire tread.

## Claims

1. A rubber composition for a tire tread comprising (A) 60 to 90 parts by weight of a rubber component (A) composed of SBR having a styrene content (St) of not more than 40% by weight, a vinyl content (Vn) in a polybutadiene moiety of 20 to 70% by weight, and a weight average molecular weight (Mw) of 60,000 to 3,000,000, (B) 10 to 40 parts by weight of a rubber component composed of a styrene-butadiene copolymer rubber (SBR) having a Tg of not more than -45°C and (C) 5 to 200 parts by weight, based upon 100 parts by weight of the rubber component (A), of a rubber component composed of low molecular weight SBR having an St of 1 to 60% by weight, a Vn of 20 to 80% by weight and an Mw of 2,000 to 50,000 the total amount of the rubber component (A) and the rubber component (B) being 100 parts by weight, wherein the Tg of the SBR of the rubber component (A) is higher by 20°C or more than the Tg of the SBR of the rubber component (B).

2. A rubber composition for a tire tread as claimed in claim 1 further comprising silica in an amount of at least 20 parts by weight, based upon 100 parts by weight of a total of the rubber component (A) and the rubber component (B), and silane coupling agent.

3. A rubber composition for a tire tread as claimed in claim 1 or 2, wherein the component (A) is 60 to 90 parts by weight, based upon the total amount of the rubber components (A) and (B), of SBR having an St of 5-37% by weight, a Vn of 30-70% and an Mw of 70,000 to 2,000,000.

4. A rubber composition for a tire tread as claimed in any one of claims 1 to 3, wherein the component (B) is 10 to 40 parts by weight, based upon the total amount of the rubber components (A) and (B), of at least one SBR having an average Tg of -105°C to -45°C.

5. A rubber composition for a tire tread as claimed in any one of claims 1 to 4, wherein the component (C) is 5 to 100 parts by weight, based upon 100 parts by weight of the rubber component (A), of a low molecular weight SBR having an St of 10-50% by weight, a Vn of 30-70% by weight and an Mw of 4,000 to 50,000.

## Patentansprüche

1. Kautschukzusammensetzung für eine Reifenlauffläche, umfassend (A) 60 bis 90 Gew.Teile einer Kautschukkomponente (A), die zusammengesetzt ist aus SBR mit einem Styrolgehalt (St) von nicht mehr als 40 Gew.%, einem Vinylgehalt (Vn) in einem Polybutadienrest von 20 bis 70 Gew.% und einem gewichtsmittleren Molekulargewicht (Mw) von 60.000 bis 3.000.000, (B) 10 bis 40 Gew.Teile einer Kautschukkomponente, die zusammengesetzt ist aus einem Styrol-Butadien-Copolymer-Kautschuk (SBR) mit einer Tg von nicht mehr als -45°C, und (C) 5 bis 200 Gew.Teile, bezogen auf 100 Gew.Teile der Kautschukkomponente (A), einer Kautschukkomponente, die zusammengesetzt ist aus niedermolekulargewichtigem SBR mit einem St von 1 bis 60 Gew.%, einem Vn von 20 bis 80 Gew.% und einem Mw von 2.000 bis 50.000, wobei die Gesamtmenge der Kautschukkomponente (A) und der Kautschukkomponente (B) 100 Gew.Teile ist, wobei die Tg des SBR der Kautschukkomponente (A) um 20°C oder mehr höher ist als die Tg des SBR der Kautschukkomponente (B).

2. Kautschukzusammensetzung für eine Reifenlauffläche wie in Anspruch 1 beansprucht, die ferner Silica in einer Menge von mindestens 20 Gew.Teilen, bezogen auf 100 Gew.Teile der Kautschukkomponente (A) und der Kautschukkomponente (B), und Silanhaftvermittler umfaßt.

3. Kautschukzusammensetzung für eine Reifenlauffläche wie in Anspruch 1 oder 2 beansprucht, in der die Komponente (A) 60 bis 90 Gew.Teile, bezogen auf die Gesamtmenge der Kautschukkomponenten (A) und (B), SBR mit einem St von 5 bis 37 Gew.%, einem Vn von 30 bis 70 % und einem Mw von 70.000 bis 2.000.000 ist.

4. Kautschukzusammensetzung für eine Reifenlauffläche wie in mindestens einem der Ansprüche 1 bis 3 beansprucht, in der die Komponente (B) 10 bis 40 Gew.Teile, bezogen auf die Gesamtmenge der Kautschukkomponenten (A) und (B), mindestens eines SBR mit einer mittleren Tg von -105°C bis -45°C ist.

5. Kautschukzusammensetzung für eine Reifenlauffläche wie in mindestens einem der Ansprüche 1 bis 4 beansprucht, in der die Komponente (C) 5 bis 100 Gew.Teile, bezogen auf 100 Gew.Teile der Kautschukkomponente (A), eines niedermolekulargewichtigen SBR mit einem St von 10 bis 50 Gew.%, einem Vn von 30 bis 70 Gew.% und einem Mw von 4.000 bis 50.000 ist.

## Revendications

1. Composition de caoutchouc pour une bande de roulement de pneumatique, comprenant (A) 60 à 90 parties en poids d'un composant de caoutchouc (A) constitué d'un SBR ayant une teneur en styrène (St) de pas plus de 40 % en poids, une teneur en vinyle (Vn) dans une fraction de polybutadiène de 20 à 70 % en poids, et un poids moléculaire moyen en poids (Mw) de 60 000 à 3 000 000, (B) 10 à 40 parties en poids d'un composant de caoutchouc constitué d'un caoutchouc de copolymère de styrène - butadiène (SBR) ayant une Tg de pas plus de -45°C et (C) 5 à 200 parties en poids, sur la base de 100 parties en poids du composant de caoutchouc (A), d'un composant de caoutchouc constitué d'un SBR de faible poids moléculaire ayant une St de 1 à 60 % en poids, une Vn de 20 à 80 % en poids et un Mw de 2000 à 50 000, la quantité totale de composant de caoutchouc (A) et de composant de caoutchouc (B) étant de 100 parties en poids, où la Tg du SBR du composant de caoutchouc (A) est supérieure de 20°C ou plus à la Tg du SBR du composant de caoutchouc (B).

2. Composition de caoutchouc pour une bande de roulement de pneumatique selon la revendication 1, comprenant en outre de la silice en une quantité d'au moins 20 parties en poids, sur la base de 100 parties en poids d'un total du composant de caoutchouc (A) et du composant de caoutchouc (B), et un agent de couplage au silane.

3. Composition de caoutchouc pour une bande de roulement de pneumatique selon la revendication 1 ou 2, où le composant (A) est de 60 à 90 parties en poids, sur la base de la quantité totale des composants de caoutchouc (A) et (B), d'un SBR ayant une St de 5 à 37 % en poids, une Vn de 30 à 70 % et un Mw de 70 000 à 2 000 000.

4. Composition de caoutchouc pour une bande de roulement de pneumatique selon l'une quelconque des revendications 1 à 3, où le composant (B) est de 10 à 40 parties en poids, sur la base de la quantité totale des composants de caoutchouc (A) et (B), d'au moins un SBR ayant une Tg moyenne de -105°C à -45°C.

5. Composition de caoutchouc pour une bande de roulement de pneumatique selon l'une quelconque des revendications 1 à 4, où le composant (C) est de 5 à 100 parties en poids, sur la base de 100 parties en poids du composant de caoutchouc (A), d'un SBR de faible poids moléculaire ayant une St de 10 à 50 % en poids, une Vn de 30 à 70 % en poids et un Mw de 4 000 à 50 000.
